(19) Europäisches Patentamt

European Patent Office

Office européen des brevets

(11) **EP 1 195 714 A1**

(12) **EUROPÄISCHE PATENTANMELDUNG**

(43) Veröffentlichungstag:
10.04.2002 Patentblatt 2002/15

(51) Int Cl.⁷: **G06K 19/077**

(21) Anmeldenummer: 00810911.8

(22) Anmeldetag: 04.10.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SOKYMAT S.A.**
**1614 Granges (Veveyse) (CH)**

(72) Erfinder:
• **Held, Philippe**
**1802 Corseaux (CH)**

• **Konopitzky, Egon**
**1618 Châtel-St-Denis (CH)**
• **Miehling, Martin**
**1614 Granges (CH)**

(74) Vertreter: **Wagner, Wolfgang, Dr. Phil., Dipl.-Phys.**
**c/o Zimmerli, Wagner & Partner AG**
**Löwenstrasse 19**
**8001 Zürich (CH)**

(54) **Transpondereinheit**

(57) Eine Transpondereinheit umfasst neben einem gekapselten Transponder (1) aus einer integrierten Schaltung (2) und einer Antennenschleife (3) eine Leiterschleifenanordnung (4) aus einer deckungsgleich auf der Antennschleife (3) angeordneten Sekundärschleife (6) mit mehreren Windungen und einer mit derselben in Reihe verbundenen wesentlich grösseren Primärschleife (5) mit weniger Windungen, z. B. nur einer Windung. Die Wechselwirkung des Transponders (1) mit Lesegeräten findet wesentlich über die Primärspule (5) statt, die über die Sekundärschleife (6) mit dem Transponder (1) induktiv eng gekoppelt ist, was Energieaufnahme durch denselben sowie auch Auslesen desselben wesentlich erleichtert.

FIG. 1

## Beschreibung

### Technisches Gebiet

Die Erfindung betrifft eine Transpondereinheit gemäss dem Oberbegriff des Anspruchs 1. Derartige Transpondereinheiten werden zur Identifikation vor allem von Gegenständen verschiedener Art eingesetzt. Ausserdem betrifft die Erfindung eine eine Transpondereinheit enthaltende Transporteinheit zum Transport von Gütern.

### Stand der Technik

Eine gattungsgemässe Transpondereinheit, bei welcher ein Transponder mit einer integrierten Schaltung und einer Antennenschleife in einer Karte gekapselt ist, ist z. B. aus der US-A-5 800 763 bekannt. Die Antennenschleife dient neben dem Aussenden von Signalen durch den Transponder der Energieversorgung der integrierten Schaltung, wenn der Transponder mittels eines Lesegeräts ausgelesen wird, indem der magnetische Anteil eines von dem letzteren ausgehenden elektromagnetischen Wechselfeldes in der Antennenschleife einen Wechselstrom induziert, der gleichgerichtet und z. B. zum Aufladen eines Kondensators genutzt wird. Im Hinblick auf eine ausreichende Energieaufnahme auch bei grossem Leseabstand und entsprechend kleiner Feldstärke sollte die von der Antennenschleife umgebene Fläche möglichst gross und ihr Ohmscher Widerstand möglichst klein sein. Auch eine verhältnismässig grosse Windungszahl ist für die Energieaufnahme grundsätzlich günstig.

Bei gattungsgemässen Transpondereinheiten sind diese Anforderungen schwer zu erfüllen. Vor allem sind grosse Schleifen mit höheren Windungszahlen schwer und nicht auf herkömmlichen Maschinen herstellbar und die entsprechenden Transponder gross und unhandlich und ihre Verpackung oder gar Kapselung aufwendig und teuer. Ausserdem ist die Windungszahl oft durch andere Anforderungen beschränkt oder weitgehend festgelegt.

### Darstellung der Erfindung

Der Erfindung liegt die Aufgabe zu Grunde, eine gattungsgemässe Transpondereinheit anzugeben, bei welcher bei verhältnismässig kleinem Transponder eine ausreichende Energieaufnahme auch bei geringen Feldstärken gewährleistet ist. Diese Aufgabe wird durch die Merkmale im Kennzeichen des Anspruchs 1 gelöst.

Die erfindungsgemässe Transpondereinheit weist eine Leiterschleifenanordnung auf mit einer verhältnismässig grossen Primärschleife und einer kleineren, mit der Antennenschleife induktiv eng gekoppelten Sekundärschleife, die vom in der Primärschleife induzierten Strom durchflossen wird. Derselbe erzeugt in der Umgebung der Sekundärschleife ein verhältnismässig starkes magnetisches Wechselfeld, das einen entsprechend grossen Strom in der Antennenschleife induziert. Die erfindungsgemässe Transpondereinheit nimmt daher auch bei geringen Feldstärken verhältnismässig viel Energie auf, so dass sie auch bei grossem Leseabstand zuverlässig funktioniert. Umgekehrt werden durch die gleiche Kopplung die vom Transponder ausgesandten Signale über einen weiteren Raumbereich verteilt, so dass die gegenseitige Lage des Transponders und des Lesegeräts weniger genau kontrolliert werden muss. Diese kommt etwa bei erfindungsgemässen Transporteinheiten mit einer integrierten erfindungsgemässen Transpondereinheit zum Tragen, bei denen das Auslesen des Transponders auch an Stellen erfolgen kann, die verhältnismässig weit von demselben entfernt sind.

### Kurze Beschreibung der Zeichnungen

Im folgenden wird die Erfindung anhand von Figuren, welche lediglich ein Ausführungsbeispiel darstellen, näher erläutert. Es zeigen

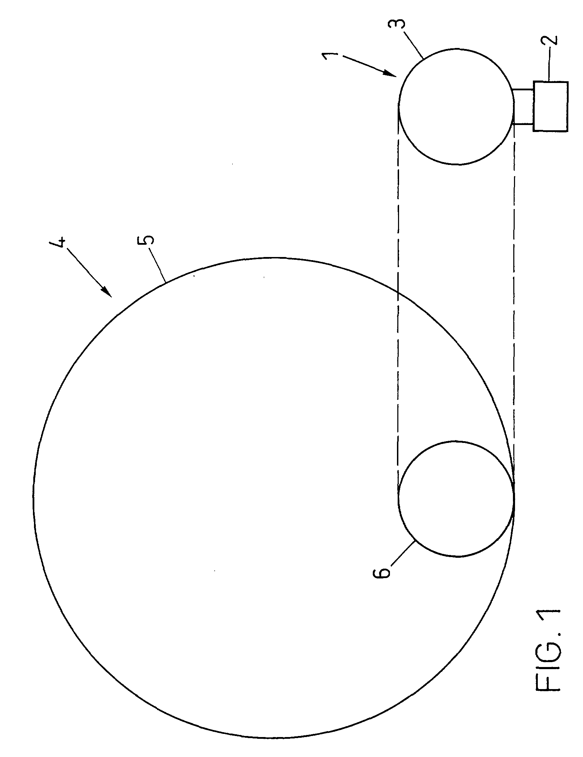

Fig. 1 schematisch eine erfindungsgemässe Transpondereinheit und

Fig. 2 eine Draufsicht auf eine erfindungsgemässe Transporteinheit.

### Wege zur Ausführung der Erfindung

Die Transpondereinheit umfasst einen Transponder 1 bekannter Art mit einer integrierten Schaltung 2 und einer Antennenschleife 3, deren Enden mit Anschlüssen der integrierten Schaltung 2 verbunden sind, an welche ein Gleichrichter und ein als Energiespeicher dienender Kondensator anschliessen. Im weiteren enthält der Transponder einen nichtflüchtigen digitalen Speicher für digitale Daten, welche zur Kennzeichnung eines mit ihm verbundenen Gegenstandes dienen sowie eine ebenfalls mit der Antennenschleife verbundene Sendeeinrichtung, mittels welcher die Daten codiert und gesendet werden können. Der Transponder ist in der Regel gekapselt, z. B. in einem geeigneten Kunststoffgehäuse oder einer ISO-Karte.

Ausserdem ist eine vom Transponder galvanisch getrennte geschlossene Leiterschleifenanordnung 4 vorgesehen mit einer Primärschleife 5 und einer mit derselben in Reihe liegenden, vorzugsweise aus dem gleichen Draht gewickelten Sekundärschleife 6. Die Primärschleife 5 weist einen Durchmesser von z. B. 300 mm auf, während die Sekundärschleife 6 vorzugsweise den gleichen Durchmesser wie die Antennenschleife 3 hat, z. B. 50 mm. Die genauen Abmessungen und Formen der Schleifen sind nicht entscheidend, doch sollte die Primärschleife 5 deutlich grösser sein als die Sekundärschleife 6, während diese in Form und Abmessungen möglichst der Antennenschleife 3 entsprechen sollte, in deren unmittelbarer Nachbarschaft sie auch angebracht ist, und zwar derart, dass sich die Sekundärschleife 6 und die Antennenschleife 3 im Interesse maximaler induktiver Kopplung möglichst genau decken. Der magnetische Fluss durch die Sekundärschleife 6 sollte möglichst vollständig auch durch die Antennenschleife 3 gehen.

Die Primärschleife 5 und die Sekundärschleife 6 können gleiche Windungszahlen aufweisen, es können sogar beide jeweils nur eine Windung umfassen, was die Herstellung sehr vereinfacht. Insbesondere dann, wenn die Windungszahl $N_1$ der Primärschleife 5 klein, z. B. $\leq 5$ oder sogar eins ist, was oft aus praktischen Gründen wünschenswert oder einfach gegeben ist, ist es jedoch meist günstiger, wenn die Windungszahl $N_2$ der Sekundärschleife 6 grösser ist.

Ein von einem Lesegerät ausgehendes elektromagnetisches Wechselfeld $\vec{B}(t)$ erzeugt einen magnetischen Fluss

$$(1) \quad \Phi_1(t) = \int_{F_1} \vec{B}(t) \cdot \vec{df},$$

durch die Primärschleife 5, wobei $F_1$ die von derselben umgebene Fläche ist. Geht man davon aus, dass die zur Ebene der Primärschleife 5 senkrechte Komponente des Magnetfelds im Bereich derselben etwa einem räumlichen Durchschnittswert $B_\perp(t)$ entspricht, so hat man

$$(1') \quad \Phi_1(t) = F_1 \frac{dB_\perp(t)}{dt}$$

Die zeitliche Veränderung des Flusses $\Phi_1(t)$ induziert in der besagten Primärschleife 5 eine Spannung

$$(2) \quad u_1(t) = -N_1 \frac{d\Phi_1(t)}{dt} = -N_1 F_1 \frac{dB_\perp(t)}{dt},$$

die einen Strom

$$(3) \quad i_L(t) = u_1(t)/R$$

in der Primärschleife 5 und der Sekundärschleife 6 erzeugt, wobei R den Ohmschen Widerstand der Leiterschleifenanordnung 4 bedeutet. Der Strom $i_L(t)$ induziert in der Antennenschleife 3 eine Spannung

$$(4) \quad u_T(t) = L \frac{di_L(t)}{dt},$$

wobei $L \sim N_2 N_T \sqrt{F_2}$ mit $N_T$ der Windungszahl der Antennenschleife 3 und $F_2$ der von der Sekundärschleife 6 aufgespannten Fläche die Kopplungskonstante für die gegenseitige Induktion zwischen der Sekundärschleife 6 und der Antennenschleife 3 bedeutet. Die induzierte Spannung $u_T(t)$ erzeugt einen Strom

$$(5) \quad i_T(t) = u_T(t)/R_T,$$

wobei $R_T$ für den Widerstand des Antennenschleifenkreises steht. Der Strom $i_T(t)$ wird schliesslich in der integrierten Schaltung gleichgerichtet und zur Aufladung des als Energiespeicher dienenden Kondensators benutzt. Insgesamt gilt für den für die Energieaufnahme massgebenden Strom

$$(6) \quad i_T(t) \sim N_1 N_2 F_1/\sqrt{F_2} \cdot N_T F_2 \cdot \frac{dB_\perp(t)}{dt}.$$

Direkte Einflüsse des vom Lesegerät erzeugten Magnetfeldes auf die Sekundärschleife 6 oder die Antennenschleife 3 sind im allgemeinen vernachlässigbar und in dieser Darstellung nicht berücksichtigt. Gegenüber direkter Einwirkung des Magnetfeldes auf die Antennenschleife wird also ein Faktor $N_1 N_2 F_1/\sqrt{F_2}$ gewonnen. Dadurch, dass $F_1$ nicht durch die Grenzen beschränkt ist, die der Grösse des Transponders 1 in der Praxis gesetzt sind und daher verhältnismässig gross sein kann, kann die Energieaufnahme also beträchtlich gesteigert werden. Durch den grösseren Durchmesser der Primärschleife 5 kann auch Energie aus einem grösseren Raumbereich aufgenommen werden. Umgekehrt werden die vom Transponder 1 erzeugten Signale ebenfalls über die Antennenschleife 3 durch deren induktive Kopplung mit der Sekundärschleife 6 auf die Leiterschleifenanordnung 4 übertragen, so dass sie in der weiteren Umgebung der Primärschleife 5 ausgelesen werden können. Insgesamt kommt es viel weniger auf die genaue Lage des Transponders 1 zum Lesegerät an. Er muss daher nicht in dessen unmittelbare Nähe gebracht werden.

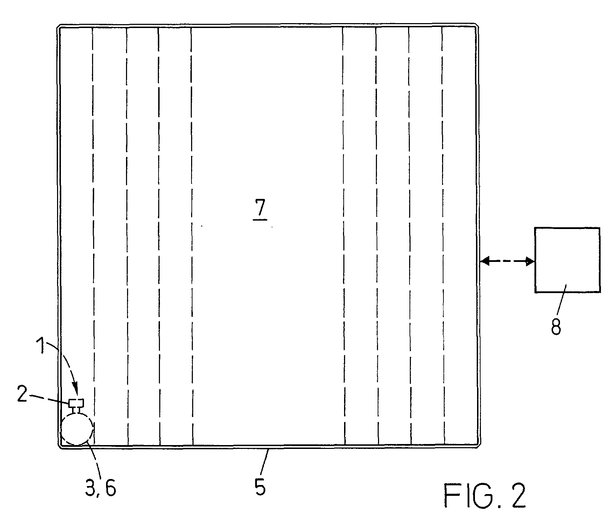

Bei der in Fig. 2 dargestellten erfindungsgemässen Transporteinheit handelt es sich um eine Europalette, eine Normpalette aus Holz mit einer Platte 7 von ca. 0,8 m $\times$ 1,2 m und mehreren parallelen Fussbalken an der Unterseite. Der gekapselte Transponder 1, bestehend aus der integrierten Schaltung 2 und der Antennenschleife 3, ist in einer Ecke der Platte 7 integriert. Die Primärschleife 5 der Leiterschleifenanordnung 4 wird von einem Band aus Stahl oder Aluminium gebildet, das die Platte 7 umgibt. Die mit derselben in Reihe liegende Sekundärschleife 6 ist ebenfalls in die Platte 1 integriert und liegt deckungsgleich auf der Antennenschleife 3 des Transponders 1. Der Transponder 1 kann wie weiter oben erläutert von einem irgendwo in der Nähe der Primärschleife 5 angeordneten Lesegerät 8 ausgelesen werden, so dass eine genaue Positionierung des Transponders 1 bezüglich des Lesegeräts 8 nicht erforderlich ist.

Grundsätzlich ähnliche Lösungen sind in vielen Bereichen, vor allem aber bei Transporteinheiten zum Transport verschiedenster Güter möglich. So kann die Primärschleife von einem in einen Behälter eingegossenen oder an der Aussenseite oder im Inneren desselben befestigten Ring oder Band o. dgl. gebildet werden, von einem ganz oder teilweise aus Metall bestehenden Wäschebügel oder auch einem Metallband, das einen Ballen von irgendwelchem Material zusammenhält. Vorzugsweise ist dabei die Primärschleife so ausgebildet, dass sie die Transporteinheit im wesentlichen umgibt, d. h. im Bereich ihrer Aussenseite - wenn auch eventuell versenkt - umläuft, so dass ihre Abmessungen zur Herstellung einer möglichst grossen von der Primärschleife umgebenen Fläche ausgenutzt sind. Auf diese Weise können mittels erfindungsgemässer Transpondereinheiten Flaschen, Eimer, Container, Wäschestükke, Stoffballen und vieles andere mehr gekennzeichnet und ihr Umlauf verhältnismässig bequem mittels Lesegeräten überwacht werden.

Natürlich können erfindungsgemässe Transpondereinheiten auch an Produkten aller Art wie Ordner, Autoreifen, Konto- und Kreditkarten etc. direkt befestigt oder in sie integriert sein.

**Bezugszeichenliste**

1    Transponder
2    integrierte Schaltung
3    Antennenschleife
4    Leiterschleifenanordnung
5    Primärschleife
6    Sekundärschleife
7    Platte
8    Lesegerät

**Patentansprüche**

1.  Transpondereinheit, welche einen Transponder (1) mit einer Antennenschleife (3) umfasst, **dadurch gekennzeichnet, dass** sie ausserdem eine Leiterschleifenanordnung (4) umfasst mit mindestens einer Sekundärschleife (6), welche mit der Antennenschleife (3) induktiv gekoppelt ist sowie mit mindestens einer Primärschleife (5) grösseren Durchmessers, welche mit der Sekundärschleife (6) in Reihe liegt.

2.  Transpondereinheit nach Anspruch 1, **dadurch gekennzeichnet, dass** der Durchmesser der Sekundärschleife (6) mindestens annähernd dem der Antennenschleife (3) entspricht.

3.  Transpondereinheit nach Anspruch 2, **dadurch gekennzeichnet, dass** die Sekundärschleife (6) im wesentlichen deckungsgleich mit der Antennenschleife (3) in unmittelbarer Nachbarschaft derselben angeordnet ist.

4.  Transpondereinheit nach einem der Ansprüche 1 bis 3, **dadurch gekennzeichnet, dass** die Sekundärschleife (6) eine grössere Anzahl von Windungen aufweist als die Primärschleife (5).

5.  Transpondereinheit nach einem der Ansprüche 1 bis 4, **dadurch gekennzeichnet, dass** die Primärschleife (5) höchstens fünf Windungen aufweist.

6.  Transpondereinheit nach Anspruch 5, **dadurch gekennzeichnet, dass** die Primärschleife (5) nur eine Windung aufweist.

7.  Transpondereinheit nach einem der Ansprüche 1 bis 6, **dadurch gekennzeichnet, dass** der Durchmesser der Antennenschleife (3) höchstens 150 mm beträgt.

8.  Transpondereinheit nach einem der Ansprüche 1 bis 7, **dadurch gekennzeichnet, dass** der Transponder (1) gekapselt und die Leiterschleifenanordnung (4) ausserhalb der Kapselung angeordnet ist.

9.  Transporteinheit mit einer integrierten Transpondereinheit nach einem der Ansprüche 1 bis 8, **dadurch gekennzeichnet, dass** die Primärschleife (5) im Bereich der Aussenseite der Transporteinheit umläuft.

10. Transporteinheit nach Anspruch 9, **dadurch gekennzeichnet, dass** sie eine Palette, ein Behälter, ein Wäschebügel oder ein Ballen ist.

FIG. 1

FIG. 2

# EP 1 195 714 A1

**Europäisches Patentamt**

## EUROPÄISCHER RECHERCHENBERICHT

Nummer der Anmeldung

EP 00 81 0911

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 249 356 A (TOSHIBA AUDIO VIDEO ENG ;TOKYO SHIBAURA ELECTRIC CO (JP)) 16. Dezember 1987 (1987-12-16) * Spalte 4, Zeile 44 – Spalte 8, Zeile 27; Abbildungen 1-5 * | 1 | G06K19/077 |
| A | EP 0 762 535 A (MITSUBISHI MATERIALS CORP) 12. März 1997 (1997-03-12) * Seite 4, Zeile 47 – Seite 5, Zeile 6; Abbildung 7 * | 1 | |
| A | DE 196 28 802 A (TELESENSOMATIC GMBH) 22. Januar 1998 (1998-01-22) * das ganze Dokument * | 1 | |

|  | RECHERCHIERTE SACHGEBIETE (Int.Cl.7) |
|---|---|
|  | G06K |

Der vorliegende Recherchenbericht wurde für alle Patentansprüche erstellt

| Recherchenort | Abschlußdatum der Recherche | Prüfer |
|---|---|---|
| DEN HAAG | 2. März 2001 | Degraeve, A |

**ANHANG ZUM EUROPÄISCHEN RECHERCHENBERICHT**
**ÜBER DIE EUROPÄISCHE PATENTANMELDUNG NR.**          EP 00 81 0911

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2001

| Im Recherchenbericht angeführtes Patentdokument | Datum der Veröffentlichung | Mitglied(er) der Patentfamilie | Datum der Veröffentlichung |
|---|---|---|---|
| EP 0249356 A | 16-12-1987 | JP 62275790 A | 30-11-1987 |
| | | JP 63057294 A | 11-03-1988 |
| | | JP 63057295 A | 11-03-1988 |
| | | DE 3771588 D | 29-08-1991 |
| | | US 4818853 A | 04-04-1989 |
| EP 0762535 A | 12-03-1997 | JP 10022722 A | 23-01-1998 |
| | | DE 69600910 D | 10-12-1998 |
| | | DE 69600910 T | 29-07-1999 |
| | | JP 10075113 A | 17-03-1998 |
| DE 19628802 A | 22-01-1998 | AU 3543497 A | 10-02-1998 |
| | | WO 9803938 A | 29-01-1998 |

EPO FORM P0461

Für nähere Einzelheiten zu diesem Anhang : siehe Amtsblatt des Europäischen Patentamts, Nr.12/82